# FASCICULE DE BREVET EUROPEEN

(11) **EP 3 350 810 B1**
(45) Date de publication et mention de la délivrance du brevet: **19.08.2020**
(21) Numéro de dépôt: 16766937.3
(22) Date de dépôt: 15.09.2016
(51) Int. Cl.: G21C 17/112, G01K 1/14

(54) **CEINTURE DE MESURE DE GRANDEURS PHYSIQUES D'UN OBJET**
GURT FÜR DIE MESSUNG DER PHYSIKALISCHEN EIGENSCHAFTEN EINES OBJEKTS
BELT FOR MEASURING PHYSICAL QUANTITIES OF AN OBJECT

(30) Priorité: 18.09.2015 FR 1558823
(43) Date de publication de la demande: 25.07.2018
(73) Titulaire: Electricité de France, 75008 Paris (FR)
(72) Inventeur: PETIT, Marc, 95300 Pontoise (FR); BLAIRON, Sylvain, 78360 Montesson (FR)
(74) Mandataire: Regimbeau
(86) Numéro de dépôt international: PCT/EP2016/071788
(87) Numéro de publication internationale: WO 2017/046222

(56) Documents cités:
- US-A- 4 529 869

## Description

L'invention concerne une ceinture de mesure de grandeurs physiques telles que température, niveau, flux thermique par exemple d'un objet.

Un domaine d'application de l'invention concerne notamment les conduites d'eau, telles que par exemple celles du circuit primaire de centrales nucléaires.

Une telle ceinture de mesure de température est connue par exemple par le document US-A-4 553 432. Dans cette ceinture connue, un fil électrique de contrôle de la température est fixé sur la ceinture par un bloc de serrage situé dans une rainure d'une isolation thermique entourant la conduite. Cette ceinture connue est utilisée pour mesurer la température et l'humidité autour de conduites de vapeurs, afin d'y détecter des fuites ou dans un égout d'une centrale nucléaire pour détecter que l'eau tombant dans cet égout provient d'une fuite, afin d'être utilisée comme système de surveillance de ceux-ci.

US4529869 divulgue un dispositif d'appui d'un thermocouple.

L'un des inconvénients de cette ceinture de US-A-4553432 connue est que le capteur de température n'est pas appliqué directement contre la conduite dont il faut mesurer la température, mais qu'une couche d'isolation thermique est comprise entre le capteur de température et la conduite.

Or, afin d'avoir une mesure de température fiable, on souhaite avoir un contact satisfaisant entre le capteur de température et l'objet.

En particulier, l'invention doit pouvoir être utilisée dans certains environnements contraignants, tels que par exemple ceux présentant un espace réduit, une haute température, des rayonnements ionisants, comme par exemple sur des conduites d'eau de réacteurs à eau pressurisée (en abrégé : REP) de centrales de production d'électricité.

Ces environnements sont soumis à des exigences supplémentaires de qualification de la ceinture de mesure, pouvant être par exemple la résistance aux séismes, la résistance à la pression, la résistance aux hautes températures, la résistance à l'humidité, la résistance aux fortes contraintes mécaniques.

En outre, dans le cas d'un environnement soumis à des rayonnements ionisants, comme par exemple pour une conduite d'eau de réacteur nucléaire à eau pressurisée, les personnes devant installer la ceinture de mesure sur la conduite sont exposées à ces rayonnements. Il s'ensuit que non seulement le personnel doit intervenir très rapidement pour minimiser la quantité de rayonnement reçue lors de son intervention, mais doit en outre disposer d'une ceinture de mesure fiable, systématique et pouvant s'adapter à tout type d'objet sur lequel elle doit être installée.

Ainsi, la ceinture de mesure doit par exemple pouvoir être installée sur un objet pouvant avoir une température moyenne de 300°C dans le cas d'une conduite d'une centrale de production d'électricité en fonctionnement et de 70°C à l'arrêt.

Dans le cas d'une conduite d'eau d'un réacteur nucléaire d'une centrale de production d'électricité, soumise à des rayonnements ionisants, l'irradiation dans la zone de montage de la ceinture peut atteindre 5 kGy/an (ou 100000 Gy en 20 ans) à pleine puissance.

Ainsi, ces environnements ne doivent pas être des facteurs pénalisants sur le temps de montage et le bon positionnement de la ceinture de fixation sur l'objet.

Dans le cas d'une conduite d'eau d'un réacteur nucléaire d'une centrale de production d'électricité, il est connu des thermocouples placés directement en contact avec la zone à étudier pour mesurer la température.

Il est connu que les thermocouples soient directement soudés sur la tuyauterie, créant des zones de contraintes en surface. A l'issue de l'instrumentation, il y avait lieu de meuler la surface sur l'épaisseur impactée par la zone de contrainte afin d'éviter tout risque ultérieur de fissuration. Cette solution peut répondre partiellement au problème de la tenue thermique mais se révèle très pénalisante en termes de dosimétrie car les temps nécessaires pour l'installation et le bon positionnement du capteur et le reconditionnement de la tuyauterie à l'issu de la campagne de mesure sont élevés. Mais nombre de tuyauteries ne sont pas accessibles à ce genre de mise en œuvre. Dans le cas de la mesure de fatigue thermique un nombre élevé de capteurs (8 à 20 pour des sections de 5 à 40.6 cm) doit être placé, selon une répartition prédéfinie en fonction des phénomènes attendus sur une même circonférence de la tuyauterie. Le tracé et plus encore le soudage en place de chaque capteur individuellement sur la tuyauterie est difficile et parfois même impossible en raison de la présence de supportages et d'obstacles ne permettant pas à un soudeur d'opérer dans un temps raisonnable. Ce problème se retrouve lors de la dépose de l'instrumentation, au cours de laquelle il y a lieu de gérer les effluents liés au meulage de la tuyauterie. Ce type d'instrumentation s'accompagne d'un dossier technique très complexe et d'autorisations administratives difficiles à obtenir.

En outre, la mise en œuvre de systèmes de positionnement et de fixation de capteurs sur la tuyauterie réunis dans un même dispositif présente de manière générale des problèmes de conduction thermique entre capteurs et tuyauterie et de modes communs entre capteurs.

Ainsi, l'invention vise à obtenir une ceinture de mesure de grandeurs physiques d'un objet, palliant les inconvénients de l'état de la technique et qui réponde aux exigences de ces environnements contraignants et reste fiable dans ceux-ci, en nécessitant un temps d'intervention très court du personnel pour le montage de la ceinture sur l'objet dans ces environnements.

A cet effet, l'invention comprend une ceinture de mesure d'un objet, la ceinture comportant :
- au moins un capteur de mesure,
- un feuillard ayant une circonférence destinée à entourer l'objet,
- un dispositif de serrage du feuillard autour de l'objet,
caractérisée en ce que la ceinture comporte en outre un dispositif d'appui du capteur de mesure selon un premier sens d'une première direction dirigée vers l'objet,
le dispositif d'appui comportant au moins un boîtier fixé au feuillard, au moins une pièce intermédiaire logée dans le boîtier, et au moins un organe de contrainte intercalé entre le boîtier et la pièce intermédiaire et apte à faire prendre à la pièce intermédiaire une première position basse d'appui vers le capteur dans le premier sens de la première direction vers l'objet,
le dispositif d'appui du capteur comporte en outre un organe de soulèvement, pour maintenir la pièce intermédiaire dans une deuxième position de soulèvement au-dessus de la première position basse dans un deuxième sens de la première direction, inverse du premier sens, à l'encontre de l'organe de contrainte,
l'organe de soulèvement étant actionnable depuis l'extérieur du boîtier pour faire passer la pièce intermédiaire de la deuxième position de soulèvement à la première position basse d'appui vers le capteur,
l'organe de soulèvement traversant un premier guide compris dans la pièce intermédiaire et étant en appui contre une butée du boîtier dans la deuxième position de soulèvement, l'organe de soulèvement étant apte à être ôté du premier guide de la pièce intermédiaire pour faire passer la pièce intermédiaire de la deuxième position de soulèvement à la première position basse d'appui vers le capteur..

Grâce à l'invention, on peut immobiliser avec rapidité et fiabilité le capteur contre l'objet dans les environnements contraignants pour le personnel. Ainsi, le montage direct du capteur contre l'objet peut être systématisé avec une grande rapidité dans des environnements contraignants tels que ceux mentionnés ci-dessus et exigeant une grande rapidité d'intervention du personnel. Grâce à l'invention, le capteur peut être appliqué directement contre l'objet par le dispositif d'appui. En outre, la deuxième position de soulèvement permet d'abord de positionner la ceinture autour de l'objet, afin de ne pas encore exercer de pression sur le capteur, puis, en passant de la deuxième position de soulèvement à la première position basse, d'appuyer le capteur contre l'objet. Ainsi, la mise en place de la ceinture, du fait qu'elle s'effectue avec la deuxième position de soulèvement du dispositif d'appui, n'est pas gênée par l'appui du capteur contre l'objet, lequel n'est effectué qu'ultérieurement, une fois la ceinture positionnée et fixée à l'objet, lorsque le dispositif d'appui passe de la deuxième position de soulèvement à la première position basse garantissant un couplage optimal du capteur. Cela permet également de ne pas détériorer les capteurs lors de la mise en place de la ceinture.

Suivant un mode de réalisation de l'invention, le premier guide comporte un trou compris dans la pièce intermédiaire pour le passage de l'organe de soulèvement lors de son passage dans la deuxième position de soulèvement.

Suivant un mode de réalisation de l'invention, l'organe de soulèvement comprend un fil ayant au moins une section d'extrémité située à l'extérieur du boîtier pour permettre d'ôter l'organe de soulèvement.

Suivant un mode de réalisation de l'invention, le capteur de mesure est un capteur de température.

Suivant un mode de réalisation de l'invention, il est compris comme capteur de mesure une pluralité de capteurs de mesure répartis le long de la circonférence du feuillard, la pluralité de capteurs de mesure étant associée à une pluralité de dispositifs d'appui respectifs, ayant une pluralité d'organes de soulèvement.

Suivant un mode de réalisation de l'invention, les organes de soulèvement peuvent être rendus solidaires entre eux.

Suivant un mode de réalisation de l'invention, les organes de soulèvement sont formés par un même fil ayant au moins une section d'extrémité située à l'extérieur des boîtiers pour permettre d'ôter les organes de soulèvement.

Suivant un mode de réalisation de l'invention, l'organe de contrainte comprend un premier ressort intercalé entre le boîtier et la pièce intermédiaire.

Suivant un mode de réalisation de l'invention, au moins une couche thermo-isolante est comprise entre la pièce intermédiaire et le capteur de mesure.

Suivant un mode de réalisation de l'invention, le dispositif de serrage du feuillard autour de l'objet comporte :
au moins une première pièce d'accrochage fixée à proximité d'une première extrémité du feuillard et au moins une deuxième pièce d'accrochage fixée à proximité d'une deuxième extrémité du feuillard,
un premier module de liaison aux pièces d'accrochage, apte à être monté d'une manière amovible sur celles-ci,
le premier module comportant une première broche d'entraînement de la première pièce d'accrochage dans une première direction de rapprochement vers la deuxième pièce d'accrochage et une deuxième broche d'entraînement de la deuxième pièce d'accrochage dans une deuxième direction de rapprochement vers la première pièce d'accrochage, au moins un deuxième guide sur lequel les première et deuxième broches sont montées coulissantes respectivement dans les première et deuxième directions de rapprochement, et au moins un deuxième ressort de contrainte monté entre au moins l'une des broches et le deuxième guide pour faire se rapprocher les broches dans la première et/ou deuxième direction de rapprochement,
un deuxième module de rapprochement des broches dans les première et deuxième directions, permettant l'immobilisation des broches dans une position de serrage de la ceinture autour de l'objet.

Suivant un mode de réalisation de l'invention, le deuxième module de rapprochement comporte une pince de saisie des broches.

Suivant un mode de réalisation de l'invention, le deuxième module de rapprochement comporte au moins un premier mors de saisie de la première broche et au moins un deuxième mors de saisie de la deuxième broche, le premier mors étant solidaire d'au moins un premier bras, le deuxième mors étant solidaire d'au moins un deuxième bras, le premier bras étant articulé par rapport au deuxième bras par un axe principal de rotation situé à distance des mors, le deuxième module de rapprochement comportant en outre au moins une vis coopérant avec les bras pour provoquer le rapprochement des mors entre eux par rotation autour de l'axe principal.

Suivant un mode de réalisation de l'invention, le module de rapprochement est du type parallélogramme ou pantographe entre la vis et les mors.

Suivant un mode de réalisation de l'invention, le deuxième module de rapprochement comporte au moins une première biellette ayant un premier axe d'articulation par rapport au premier bras entre l'axe principal et le premier mors, au moins une deuxième biellette ayant un deuxième axe d'articulation par rapport au deuxième bras entre l'axe principal et le deuxième mors, les biellettes étant articulées entre elles par un troisième axe situé à distance des premier et deuxième axes, la vis coopérant avec un premier support monté sur l'axe principal et avec un deuxième support monté sur le troisième axe pour permettre de rapprocher les mors l'un de l'autre par éloignement des premier et deuxième supports l'un de l'autre.

L'invention sera mieux comprise à la lecture de la description qui va suivre, donnée uniquement à titre d'exemple non limitatif en référence aux dessins annexés, sur lesquels :
- la figure 1 est une vue schématique de la ceinture de mesure dans un plan transversal, lorsqu'elle est installée autour d'un objet, suivant un mode de réalisation de l'invention,
- la figure 2 est une vue schématique de dessus d'un feuillard de la ceinture suivant un mode de réalisation de l'invention en position dépliée à plat,
- la figure 3 est une vue schématique en coupe axiale d'un dispositif d'appui du capteur suivant un mode de réalisation de l'invention,
- la figure 4 est une vue schématique en coupe transversale du dispositif d'appui du capteur de la figure 3, suivant un mode de réalisation de l'invention,
- la figure 5 est une vue schématique de dessus d'un dispositif de serrage de la ceinture suivant un mode de réalisation de l'invention,
- la figure 6 est une vue schématique d'une partie du dispositif de serrage suivant la figure 5, dans un plan transversal,
- la figure 7 est une vue schématique d'une partie du dispositif de serrage suivant un mode de réalisation de l'invention dans un plan transversal,
- la figure 8 est une vue schématique en coupe de dessus d'une partie du dispositif de serrage, organe de fixation et organe de rapprochement, suivant un mode de réalisation de l'invention,
- la figure 9 est une vue schématique de dessus du dispositif de serrage suivant un mode de réalisation de l'invention,
- la figure 10 est une vue schématique de côté d'un module de rapprochement du dispositif de serrage dans une position de serrage suivant un mode de réalisation de l'invention, dans un plan transversal,
- la figure 11 est une vue schématique du module de rapprochement du dispositif de serrage, dans une position de libération suivant un mode de réalisation de l'invention, dans un plan transversal,
- la figure 12 est une vue schématique en coupe axiale du module de rapprochement suivant un mode de réalisation de l'invention,
- la figure 13 est une vue schématique en coupe axiale d'un bras du module de rapprochement, suivant un mode de réalisation de l'invention,
- la figure 14 est une vue schématique du module de rapprochement dans la position de serrage pour un autre diamètre de l'objet, dans un plan transversal,
- la figure 15 est un schéma d'une chaine de mesure, dans laquelle peut être prévue la ceinture suivant l'invention,
- la figure 16 est une vue schématique en coupe axiale d'un feuillard de la ceinture, suivant un mode de réalisation de l'invention,
- la figure 17 est une schématique en coupe d'une partie dispositif d'appui du capteur suivant un mode de réalisation de l'invention.

Aux figures, la ceinture 1 de mesure suivant l'invention sert à fixer au moins un capteur 5 contre un objet OBJ. Cet objet OBJ peut être par exemple une conduite OBJ de fluide, tel que par exemple une conduite d'eau, ainsi que cela est décrit ci-dessous. Un cas d'application de l'invention est une ceinture 1 de fixation mécanique d'un ou plusieurs capteur(s) 5 de mesure sur une conduite de liquide ou de gaz comme objet OBJ. L'objet OBJ est par exemple une conduite d'eau du circuit primaire d'un réacteur nucléaire à eau pressurisée (REP) d'une centrale de production d'électricité. La conduite d'eau peut être une tuyauterie haute pression. Bien entendu, la ceinture 1 peut comporter un ou plusieurs capteurs 5 tels que un ou plusieurs capteur de température, de mesure de niveau, de mesure de flux thermique ou tout autre capteur de mesure d'une grandeur physique. Ces capteurs 5 peuvent être des capteurs de température (thermocouples, sondes platines, par exemple) mais également d'autres types de capteurs (mesure de niveau, flux thermique, par exemple). Différents types de capteurs peuvent cohabiter sur une seule et même ceinture et être mis en œuvre simultanément.

La ceinture 1 comporte un feuillard 10 ayant une circonférence destinée à entourer l'objet OBJ, tel que par exemple la conduite OBJ.

Aux figures, l'objet OBJ s'étend suivant une direction axiale X, autour de laquelle la ceinture 1 doit être disposée. Par conséquent, le feuillard 10 de la ceinture 1 entoure l'objet OBJ dans un plan transversal à la direction X, ce plan transversal étant formé par les directions Z et Y, perpendiculaires entre elles et perpendiculaires à la direction X. La direction Z part de l'axe X de l'objet OBJ pour traverser l'objet OBJ vers la ceinture 1 devant entourer l'objet OBJ autour de cet axe X. La direction Y est la direction tangente à la circonférence du feuillard 10 autour de l'objet OBJ et autour de l'axe X. Le feuillard 10 est une bande, par exemple métallique.

L'objet OBJ ou la conduite OBJ a par exemple un contour extérieur cylindrique, par exemple circulaire. Par exemple, dans le cas d'un objet OBJ cylindrique circulaire autour de l'axe X, la direction Z est la direction radiale centrifuge, partant de l'objet OBJ, de l'intérieur vers l'extérieur par rapport à la ceinture 1. L'objet OBJ ou la conduite OBJ peut avoir une surface extérieure métallique, par exemple en acier, contre laquelle la ceinture 1 est disposée. Bien entendu, l'invention peut s'appliquer à tout type d'objet, notamment cylindrique autour de la direction X devant être entourée par la ceinture 1, pouvant être autre que ceux mentionnés ci-dessus comme par exemple les systèmes thermodynamiques, l'agro-alimentaire, la pétrochimie, les unités de méthanisation.

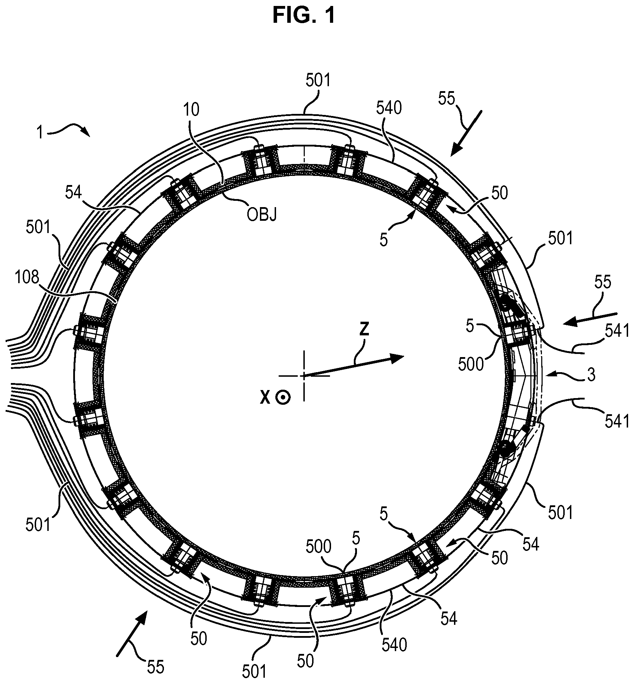

La ceinture 1 comporte au moins un capteur 5. Suivant un mode de réalisation, la ceinture 1 comporte au moins un capteur 5 de température. Par exemple, à la figure 1, une pluralité de capteurs 5 de température sont compris dans la ceinture 1. Le ou les capteurs 5 de température sont montés en-dessous du feuillard 10 et donc à distance du feuillard 10. Suivant un mode de réalisation, au moins une couche thermo-isolante 6 inférieure est comprise entre le feuillard 10 et le ou les capteurs 5 de température. Cette couche thermo-isolante 6 est par exemple fixée sous le feuillard 10, sous son côté intérieur 109 tourné vers l'objet OBJ, tout le long de sa circonférence devant entourer l'objet OBJ le long de la direction tangentielle Y. Le capteur 5 de température ou chacun des capteurs 5 de température comprend par exemple un thermocouple 500. Les capteurs 5 sont par exemple à égale distance l'un à la suite de l'autre en-dessous du feuillard 10. Par exemple, différents types de capteurs, c'est-à-dire des capteurs mesurant des grandeurs physiques différentes, peuvent cohabiter sur une seule et même ceinture et être mis en œuvre simultanément.

La ceinture 1 comporte en outre un dispositif 8 de serrage du feuillard 10 autour de l'objet OBJ. Le dispositif 8 de serrage permet par exemple un accrochage du feuillard 10 autour de l'objet OBJ.

Suivant un mode de réalisation, le capteur 5 fait partie d'une chaîne de mesure. La figure 1 représente ces éléments ainsi que les interfaces entre la chaine de mesure et les éléments externes. Une première interface est par exemple formée par la surface externe SUR de l'objet OBJ, contre laquelle le capteur 5 doit être fixé par la ceinture 1. Le capteur 5 sert à transformer la grandeur physique G ou mesurande G en signal exploitable S (souvent électrique). Le conditionneur COND convertit la grandeur S en sortie du capteur 5 en une tension dont l'amplitude ou la fréquence reflète l'évolution temporelle de la grandeur physique G. La première interface SUR constitue la frontière entre le processus physique et l'information recherchée. La capacité du capteur 5 à mesurer la grandeur physique peut être pénalisée par des éléments propres à l'environnement (corrosion, irrégularités géométrique, humidité, etc.) et particulièrement pour les capteurs en contact direct.

Dans certaines applications (ex. mesures accrochables sur une tuyauterie) il existe un autre élément indispensable pour le bon fonctionnement de la chaine d'instrumentation. Il s'agit du système 1 de fixation mécanique du capteur 5 qui a comme principal rôle de supporter et maintenir le capteur 5 en contact avec le composant dont on veut faire la mesure, le plus souvent une tuyauterie, permettant que la chaine continue d'assurer la fonction attendue : mesurer la grandeur physique. Pour garantir le bon fonctionnement du capteur 5, le système 1 de fixation doit aussi l'isoler de toute perturbation inhérente au processus mais non désirable pour la mesure (ex. vibration, contraintes thermiques et mécaniques, etc.).

Dans le cas d'un réacteur à eau pressurisée (REP), un strict respect des objectifs de qualité à atteindre est indispensable. Tel est le cas notamment du matériel mécanique résistant à la pression (circuits primaire, secondaire et auxiliaires) pour laquelle les Règles de Conception et de Construction (RCC-M pour les matériels mécanique) ont été définies. Pour tout matériel mécanique non soumis aux RCC, comme par exemple pour le système 1 de fixation du capteur 5, un processus de qualification doit être mis en place pour garantir les performances métrologiques des chaines d'instrumentation (qualification fonctionnelle). Concernant le système 1 de fixation mécanique proprement dit, il n'existe pas de normes de conception et fabrication dédiées, mais les essais de qualification doivent vérifier leur innocuité vis-à-vis du composant sur lequel il sera installé.

Lors de la qualification, des conditions telles que la résistance aux séismes, la pression, la température ou l'humidité peuvent être vérifiées.

En plus des conditions requises lors de la qualification, d'autres conditions particulières du circuit primaire d'un REP doivent être considérées quand de tels systèmes 1 de fixation y sont installés à demeure :
- Une température moyenne de 300°C en fonctionnement, et inférieure à 70°C en arrêt de tranche.
- Une irradiation de 5 kGy/an (ou 100000 Gy en 20 ans) à pleine puissance.

La première condition ci-dessus a un impact sur le choix du matériau et sur la conception du système 1 de fixation. Le système 1 de fixation du capteur 5 doit être conçu pour résister aux fortes contraintes mécaniques tout en conservant sa fonction principale. Quant à la deuxième condition, elle joue un rôle implicite sur le choix du matériau mais le principal impact de l'irradiation sur la conception du système 1 de fixation du capteur 5 est le temps d'intervention nécessaire pour l'installation du système 1 de fixation ou pour toute opération de maintenance du capteur 5 ou du système 1 de fixation lui-même.

Un cas d'application de l'invention est une ceinture 1 de fixation mécanique d'un capteur 5 de température contre une conduite OBJ d'eau du circuit primaire d'un réacteur nucléaire à eau pressurisée d'une centrale de production d'électricité.

Suivant l'invention, la ceinture 1 comporte un dispositif 50 d'appui du capteur 5 de température selon un premier sens 55 d'une première direction dirigée vers l'objet OBJ. Le dispositif 50 d'appui comporte au moins un boîtier 53 fixé au feuillard 10. Le capteur 5 de température est situé sous le feuillard 10. Le boîtier 53 est situé sur le feuillard 10.

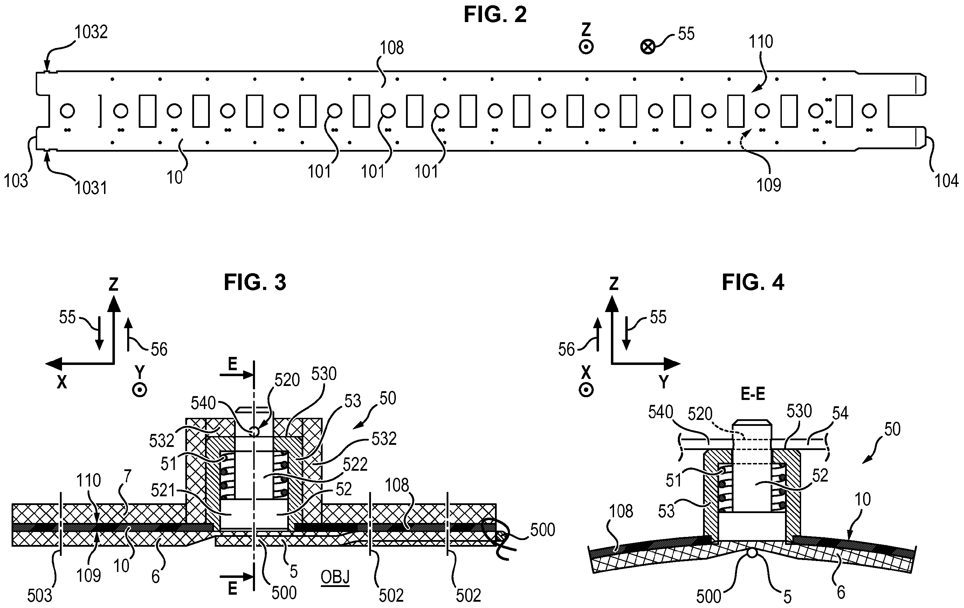

Le dispositif 50 d'appui comporte en outre au moins une pièce intermédiaire 52 (ou poussoir 52) logée dans le boîtier 53 et au moins un organe 51 de contrainte intercalé entre le boîtier 53 et la pièce intermédiaire 52. La pièce intermédiaire 52 sert à assurer un couplage du capteur 5 de température contre l'objet OBJ ou la conduite OBJ ou tuyauterie OBJ. L'organe 51 de contrainte est apte à faire prendre à la pièce intermédiaire 52 une première position basse d'appui vers le capteur 5 dans le premier sens 55 dirigé vers l'objet OBJ. Par exemple, ainsi que cela est représenté à la figure 2, le feuillard 10 comporte un ou plusieurs trous 101 permettant le passage de la ou des pièces intermédiaires 52 au travers du feuillard 10 dans le sens 55. Le ou les boîtiers 53 sont fixés chacun sur les bords du trou 101 correspondant, par exemple par soudure. Afin d'éviter ou diminuer une conduction directe d'un emplacement de capteur 5 de température à l'autre, ce qui pourrait perturber la mesure, le feuillard 10 présente des découpes 102, par exemple rectangulaires, situées entre les trous 101. Le boîtier 53 a par exemple une surface latérale cylindrique autour du sens 55 de guidage, par exemple circulaire, la pièce intermédiaire 52 étant également cylindrique, par exemple circulaire, contre et à l'intérieur du boîtier 53. Le boîtier 53 est par exemple un cylindre perforé.

Aux figures, le sens 55 dirigé vers l'objet OBJ est par exemple en sens inverse de la direction Z.

Par exemple, dans le cas d'un objet OBJ cylindrique circulaire autour de l'axe X, le premier sens 55 est dans ce cas la direction radiale centripète.

Le dispositif 50 d'appui comporte en outre un organe 54 de soulèvement pour retenir la pièce intermédiaire 52 dans une deuxième position de soulèvement située au-dessus de la première position basse dans un deuxième sens 56 de la première direction, inverse du premier sens 55 à l'encontre de l'organe 51 de contrainte. Ce deuxième sens 56 correspond par exemple, dans le cas d'un objet OBJ cylindrique circulaire, à la direction radiale centrifuge parallèle à la direction Z et du même sens que celle-ci.

L'organe 54 de soulèvement est actionnable depuis l'extérieur du boîtier 53 pour faire passer la pièce intermédiaire 52 de la deuxième position de soulèvement à la première position basse d'appui vers le capteur 5.

La ceinture 1 tient compte des contraintes liées à l'environnement nucléaire (rayonnement ionisant) ainsi que toutes les autres contraintes propres à une installation industrielle telle que l'encombrement, la compatibilité des matériaux, la tenue mécanique du système au séisme.

La ceinture 1 de mesure suivant l'invention offre l'avantage de pouvoir installer un nombre important de capteurs 5 de mesure pouvant être de nature différente, c'est-à-dire pouvant mesurer des grandeurs physiques différentes, d'une manière très rapide autour d'un objet OBJ, ce qui est particulièrement intéressant dans le cas où cet objet OBJ est situé dans un environnement contraignant, tel que, par exemple, pour les applications nucléaires où le temps d'intervention est très limité, comme dans l'enceinte d'un réacteur nucléaire soumis à des radiations ionisantes, pour lequel les opérateurs doivent intervenir sur une durée la plus courte possible pour être soumis le moins possible à ces radiations. L'invention permet ainsi d'installer avec une grande fiabilité un grand nombre de capteurs 5, par exemple de température, dans ces environnements contraignants.

L'invention permet de mettre en contact le ou les capteur(s) 5 ,avec un bon couplage, directement avec l'objet OBJ, ce qui permet d'optimiser la précision de la mesure, ou des mesures, et de diminuer les temps de réponse de celle(s)-ci.

Aux figures 3 et 4, la pièce intermédiaire 52 ou sa partie 521, destinée aux capteurs de température, est par exemple en forme de pion d'appui. La pièce intermédiaire 52 comporte une base 521 inférieure, par exemple cylindrique circulaire autour du sens 55 d'appui. La base 521 inférieure est située du côté du capteur 5 et est fixée sur son côté extérieur à une tige 522 dépassant du dessus du boîtier 53 dans le sens 56. L'organe 51 de contrainte comprend par exemple un premier ressort 510 intercalé entre le boîtier 53 et la pièce intermédiaire 52. Par exemple, le premier ressort 510 est logé dans le boîtier 53. Le ressort 510 est par exemple un ressort de compression enfilé autour de la tige 522 contre la base 521 pour pousser cette base 521 dans le premier sens 55 vers le capteur 5 de température.

Suivant un mode de réalisation, l'organe 54 de soulèvement traverse un premier guide 520 compris dans la pièce intermédiaire 52 et est en appui contre une butée 530 du boîtier 53 dans la deuxième position de soulèvement. L'organe 54 de soulèvement est apte à être ôté du premier guide 520 de la pièce intermédiaire 52 pour abaisser la pièce intermédiaire 52 de la deuxième position à la première position d'appui vers le capteur 5. La butée 530 est par exemple formée par une paroi extérieure du boitier 53, éloignée du capteur 5.

Suivant un mode de réalisation, le premier guide 520 est formé par un trou 520 compris dans la pièce intermédiaire 52 pour le passage de l'organe 54 de soulèvement dans la deuxième position. Le trou 520 est compris par exemple dans la partie extérieure de la tige 522, située en dehors du boîtier 53 dans la deuxième position de soulèvement.

Par exemple, l'organe 54 de soulèvement comprend ou est formé par un fil 540 ayant une ou deux sections 541 d'extrémité situées à l'extérieur du boîtier 53 pour permettre d'ôter l'organe 54 de soulèvement. Le fil 540 est par exemple métallique, et peut être en acier inoxydable.

Ainsi que cela est représenté à la figure 1, il est par exemple compris comme capteur 5, une pluralité de capteurs 5 de température répartis le long de la circonférence 108 du feuillard 10 pour se trouver répartis autour de l'objet OBJ. Il est compris pour la pluralité de capteurs 5 de température respectivement une pluralité de dispositifs 50 d'appui respectifs associés, tels que celui décrit ci-dessus. Le ou les capteurs 5 de température sont reliés chacun à un câble extérieur 501, qui s'étend sous le feuillard 10 et qui dépasse de celui-ci pour être accessible de l'extérieur et pouvoir être raccordé à une unité extérieure d'acquisition et de traitement des mesures effectuées par le capteur 5 (par exemple le conditionneur COND et/ou autre). Les dispositifs 50 d'appui sont par exemple à égale distance l'un à la suite de l'autre sur le feuillard 10. Les organes 54 de soulèvement respectifs des dispositifs 50 d'appui sont par exemple solidaires entre eux.

Suivant un mode de réalisation, les organes 54 de soulèvement sont formés par un même fil 540 ayant une ou deux sections 541 d'extrémité situées à l'extérieur du boîtier 53 pour permettre d'ôter les organes 54 de soulèvement.

Ainsi, au cours d'une première étape de mise en place de la ceinture 1 autour de l'objet OBJ, les dispositifs 50 d'appui sont d'abord prépositionnés dans la deuxième position de soulèvement de la pièce intermédiaire 52. On dispose le feuillard 10 autour de l'objet OBJ, tel que par exemple une conduite OBJ cylindrique circulaire. On fixe par le dispositif de serrage le feuillard 10 autour de l'objet OBJ dans une position d'immobilisation.

Puis, au cours d'une deuxième étape, on fait passer le ou les dispositif(s) 50 d'appui de la deuxième position de soulèvement à la première position basse en ôtant l'organe 54 de soulèvement, par exemple en tirant sur le fil 540 pour ôter ce dernier. L'organe 51 de contrainte déplace alors la pièce intermédiaire 52 dans le premier sens 55 vers le capteur 5 de température et vers l'objet OBJ, ce qui maintient le capteur 5 de température entre la pièce intermédiaire 52 et l'objet OBJ. Ainsi, l'organe 50 de soulèvement empêche, lorsque l'on déplace le feuillard 10 par rapport à l'objet OBJ lors de la première étape de mise en place, de mettre en pression le capteur 5 de température et de le détériorer.

Suivant un mode de réalisation, la au moins une couche thermo-isolante 6 inférieure est comprise entre la pièce intermédiaire 52 et le capteur 5 de température. Une autre couche thermo-isolante 7 extérieure peut être fixée sur tout ou partie de la surface extérieure 110 du feuillard 10, éloignée de l'objet OBJ. La couche thermo-isolante 7 extérieure peut recouvrir le ou les dispositifs 50 d'appui, y compris la couche 532. La couche thermo-isolante 6 et/ou 7 et/ou 532 a une conductivité thermique inférieure à celle du feuillard 10 et/ou à celle de l'objet OBJ ou à celle de l'acier. Par exemple, la couche thermo-isolante 6 et/ou 7 et/ou 532 est en un matériau ayant une conductivité thermique inférieure ou égale à 0.5 W/mK à 300 °C. Suivant un mode de réalisation, le matériau de la couche thermo-isolante 6 et/ou 7 et/ou 532 ne contient pas d'halogènes, pour pouvoir être approprié à l'utilisation dans un environnement nucléaire (REP ou autres), ainsi que mentionné ci-dessus. Une bavette thermo-isolante rabattable 800, par exemple en toile, fixée d'un côté du dispositif 8 de serrage, peut être comprise pour recouvrir le dispositif 8 de serrage dans sa position d'immobilisation. Par exemple, la couche thermo-isolante 6 et/ou 7 et/ou 532 est en une toile de verre. La couche thermo-isolante 6 inférieure, en contact permanent avec l'objet OBJ, évite toute formation de lame d'air entre la ceinture 1 et l'objet OBJ. Dans le cas des thermocouples 500, les capteurs 5, mis en contact individuellement et isolés par le tissu de verre 6 disposent d'un temps de réponse rapide et d'une bonne précision de mesure, les effets de mode commun étant limités grâce au design du ruban métallique 10.

Suivant un mode de réalisation, le thermocouple 500 du capteur 5 de température est fixé, par exemple par ligature(s) 502, sous la couche thermo-isolante 6 inférieure, et par exemple avec également la couche thermo-isolante extérieure 7 sur le feuillard 10. Ainsi le capteur 5 de température ou le thermocouple 500 est en contact avec l'objet OBJ dans la deuxième position basse du dispositif 50 d'appui sans être en contact direct avec le feuillard 10, on limite ainsi les drains thermiques causés par la ceinture. Le thermocouple 500 a par exemple un diamètre de moins de 5 mm, et est par exemple de 1 mm. Une ou plusieurs ligature(s) 503 peuvent être également comprises pour fixer la couche thermo-isolante extérieure 7 sur le feuillard 10, par exemple avec la couche thermo-isolante 6 inférieure, à des endroits autres que ceux où se trouve le capteur 5 de température ou thermocouple 500.

Le boîtier 53 peut également être recouvert d'une couche thermo-isolante 532, en ayant néanmoins un passage pour la pièce intermédiaire 52 et/ou la tige 522 et/ou l'organe 54 de soulèvement.

Le feuillard 10 est par exemple métallique, en forme de ruban, par exemple en une tôle d'acier inoxydable. Le ruban métallique 10 sert à encercler la canalisation pour garantir la fixation solide des autres éléments du système. La longueur du feuillard 10 peut être découpée pour être adaptée à la circonférence de l'objet OBJ ou de la conduite OBJ. Le feuillard 10 est configuré pour supporter les variations de température (et donc les contraintes mécaniques) propres par exemple d'une tuyauterie haute pression OBJ (par exemple le circuit primaire d'un réacteur à eau pressurisée). La configuration du feuillard 10 peut être adaptée à l'instrumentation de coudes ; en ce cas, la fermeture par le dispositif de serrage 10 sera positionnée sur la fibre neutre du coude.

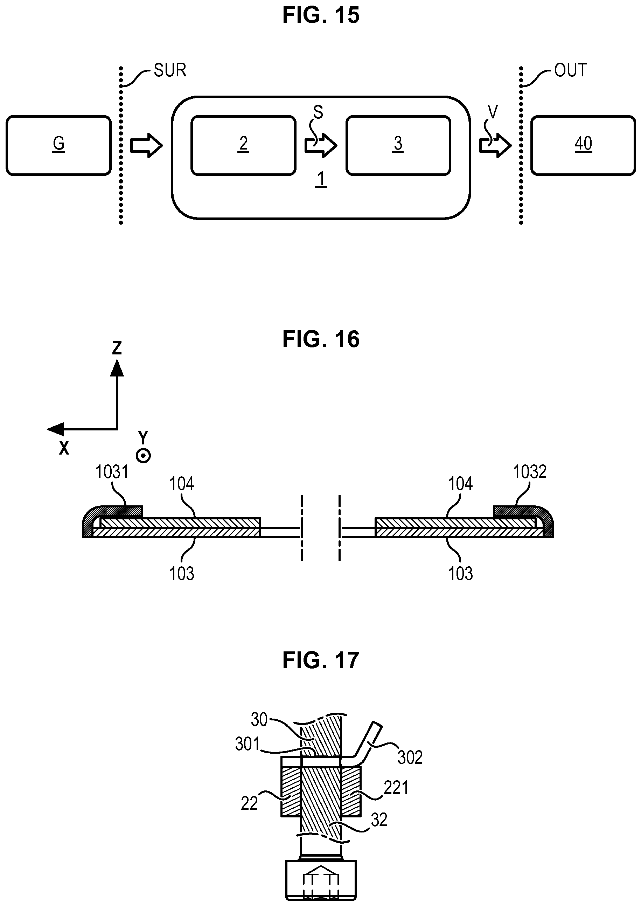

Suivant un mode de réalisation représenté à la figure 16, le feuillard 10 a une deuxième extrémité 104 plus étroite suivant la direction axiale X que son autre première extrémité. La deuxième extrémité 104 vient se glisser sous deux guides métalliques 1031 et 1032 soudés sur les bords transversaux de l'autre première extrémité inférieure 103 du feuillard 10.

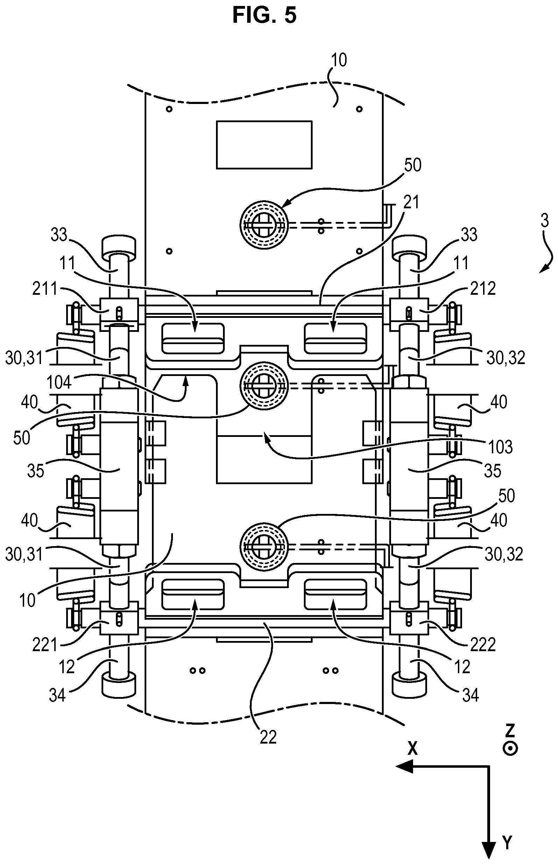

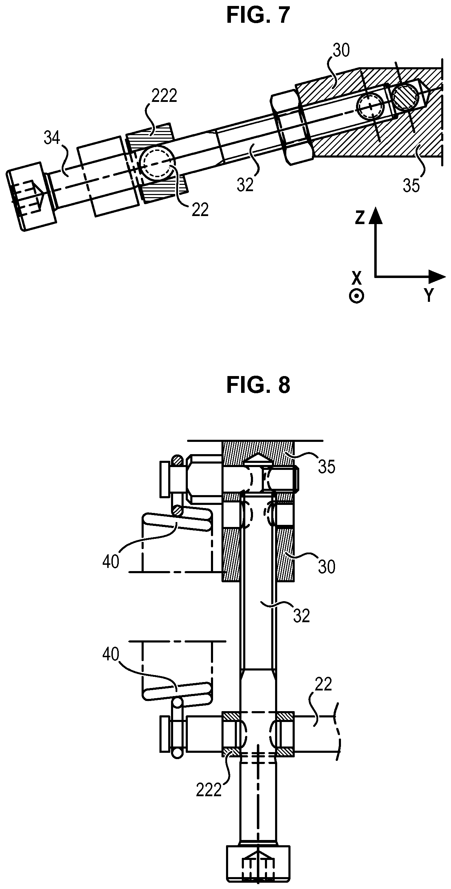

On décrit ci-dessous les modes de réalisation du dispositif 8 de serrage du feuillard 10 autour de l'objet OBJ, en référence aux figures 5 à 14.

Aux figures 5 à 9, le dispositif de 8 serrage du feuillard 10 comporte au moins une première pièce 11 d'accrochage, fixée (par exemple par soudage) à proximité d'une première extrémité 103 du feuillard et par exemple deux pièces 12 d'accrochage éloignées l'une de l'autre suivant la direction axiale X. Le dispositif 8 de serrage du feuillard 10 comporte également au moins une deuxième pièce 12 d'accrochage fixée (par exemple par soudage) à proximité de la deuxième extrémité 104 du feuillard 10, par exemple deux pièces 12 d'accrochage éloignées l'une de l'autre suivant la direction axiale X. Un premier module 3 de liaison aux pièces 11, 12 d'accrochage est apte à être monté d'une manière amovible sur celles-ci. Les pièces 11, 12 d'accrochage ont au moins un crochet saillant 111, 121, par exemple en forme de V, les crochets 111, 121 s'écartant l'un de l'autre en sens inverse l'un de l'autre selon la direction Y. Les pièces 11, 12 ou crochets 111, 121 ont chacun une gorge 112, 122 de réception de broches respectivement 21 et 22. Les pièces 11, 12 d'accrochage peuvent être soudées à la demande selon la géométrie de la ceinture en fonction du diamètre de l'objet OBJ. Les pièces 11, 12 d'accrochage permettent un solide assemblage entre le feuillard 10 et l'objet OBJ lors de la première étape de mise en place, pour permettre ensuite la fixation du module 200 de rapprochement.

Le premier module 3 comporte une première broche 21 d'entraînement de la première pièce 11 d'accrochage dans une première direction de rapprochement de la deuxième pièce 12 d'accrochage et une deuxième broche 22 d'entraînement de la deuxième pièce 12 d'accrochage dans une deuxième direction de rapprochement vers la première pièce 11 d'accrochage.

Le module 3 de liaison comporte un deuxième guide 30 sur lequel les première et deuxième broches 21, 22 sont montées coulissantes respectivement dans les première et deuxième directions de rapprochement entre elles, et au moins un deuxième ressort 40 de contrainte monté entre au moins l'une des broches 21, 22 et le deuxième guide 30 pour faire se rapprocher les broches 21, 22 dans la première et/ou deuxième direction(s) de rapprochement. Les première et deuxième directions de rapprochement sont donc sensiblement parallèles à la direction Y aux figures, c'est-à-dire à la direction tangente à la circonférence 108 du feuillard 10 autour de l'objet OBJ et autour de l'axe X. Le guide 30 est par exemple réglable.

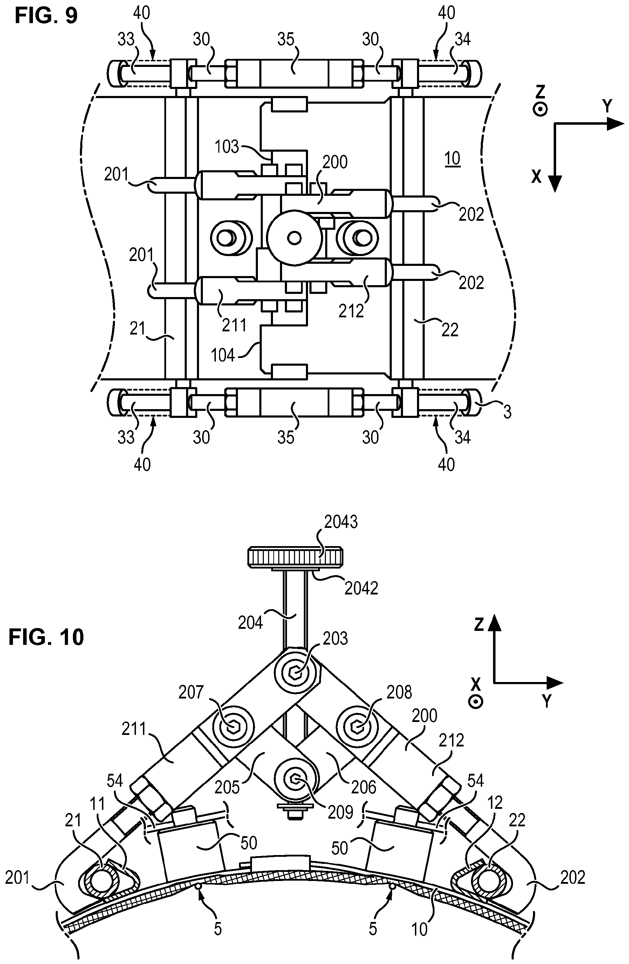

Le ressort 40 est par exemple un ressort de traction à la figure 5, tandis que, dans l'exemple de la figure 9, le ressort 40 est un ressort de compression. Il est par exemple compris au moins un ressort 40 de contrainte monté entre la broche 21 et le guide 30 et au moins un autre ressort 40 monté entre la broche 22 et le guide 30.

Le guide 30 comporte par exemple une première partie 31 de guidage, sur laquelle une première partie 211 de la première broche 21 est montée coulissante et sur laquelle une première partie 221 de la deuxième broche 22 est montée coulissante, ainsi qu'une deuxième partie 32 de guidage sur laquelle une deuxième partie 212 de la première broche 21 est montée coulissante et une deuxième partie 222 de la deuxième broche 22 est montée coulissante. Le guide 30 ou chaque partie 31, 32 de guidage est par exemple en forme d'étrier ayant d'une part une première section 33 de guidage de la première broche 21, et d'autre part une deuxième section 34 de guidage de la deuxième broche 22. Les sections 33, 34 sont raccordées à une âme 35 située entre elles dans la première et/ou deuxième direction de rapprochement.

Pour mettre en place le module 3 de liaison, on passe la première broche 21 derrière la ou les pièces 11 d'accrochage à l'encontre de la force du ou des ressort(s) 40 et on passe la broche 22 derrière la pièce 12 d'accrochage à l'encontre de la force des ressorts 40 agissant sur cette broche 22.

Suivant un mode de réalisation représenté à la figure 17, le guide 30 peut comporter un ou plusieurs trous 301 d'arrêt dans lesquels viennent se placer un ou plusieurs autres fils 302 (par exemple métalliques) de retenue de la broche 21 (ou partie 211 ou 212) et/ou 22 (ou partie 221 ou 222) à l'encontre de la force exercée par le ressort 40, dans une position d'écartement des broches 21 et 22 par rapport aux pièces 11, 12 d'accrochage. Cela permet ainsi d'enfiler les broches 21 et 22 autour des pièces 11, 12 d'accrochage. Il suffit alors de retirer le ou les fils 302 pour relâcher le ressort 40 qui déplace alors la broche 21 et/ou 22 contre les pièces 11,12 d'accrochage pour les enserrer. Le module 3 de liaison assure un maintien élastique sur l'objet OBJ afin de résister aux dilatations différentielles et aux vibrations. Le module 3 de liaison peut ne pas être conçu pour supporter les efforts mécaniques intenses exercés notamment lors de la mise en pression des capteurs 5. Le module 3 de liaison permet d'assurer le maintien de la ceinture 1 sur toute la plage dimensionnelle de la norme.

Le module 3 permet de pré-positionner la ceinture 1 autour de l'objet OBJ, pour dans un premier temps refermer la ceinture 1 autour de l'objet OBJ au cours de la première étape. Le ou les ressort(s) 40 permettent de pré-contraindre le premier module 3 dans une position de liaison des pièces 11, 12 d'accrochage entre elles, afin de refermer le feuillard 10 autour de l'objet OBJ.

La ceinture 1 de mesure permet la mise en œuvre simultanée d'une grande quantité de points de mesure en quelques minutes tout en garantissant leur positionnement géométrique. Fabriquée pour un diamètre de tuyauterie, elle est positionnable, sans réglage, sur toute l'étendue de la norme. Le positionnement des capteurs 5 mais aussi de la sortie des câbles des capteurs 5 lors de la fabrication permet, en application de la procédure de mise en œuvre, de se garantir contre toute erreur de positionnement et toute ambiguïté de repérage. Les recommandations qui y sont faites concernant le colisage permettent de limiter les risques de contamination surfacique radiologique ou chimique.

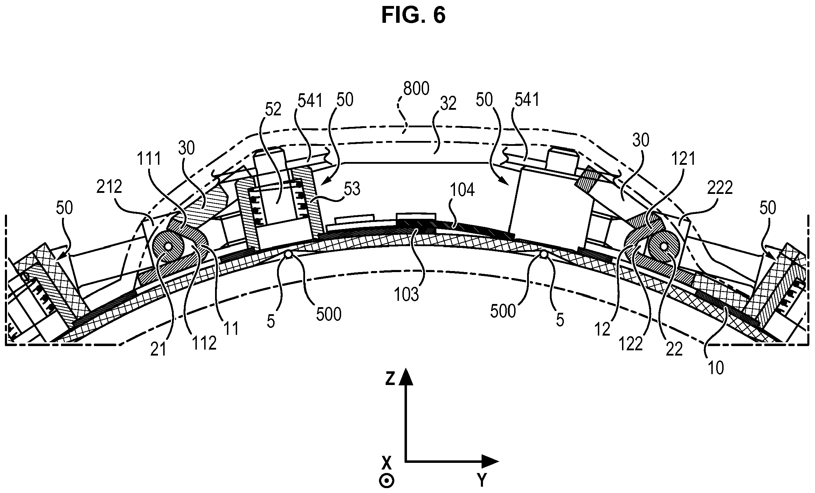

La ceinture 1 permet de réaliser des mesures sur des tuyauteries OBJ de petits diamètres avec une grande densité de points de mesure en mixant au besoin les types de capteurs et de pouvoir réaliser des mesures dans des coudes et sur tous diamètres. La ceinture 1 de mesure est compacte et facilement adaptable aux besoins spécifiques d'emploi. Sa plage d'applicabilité va de 1.5 pouces à plusieurs centaines de pouces. Dans le cas de grands diamètres de l'objet OBJ, le recours à plusieurs sections de feuillard 10, reliées entre elles permet de garantir un bon maintien de la ceinture 1 en tout point de la circonférence, les dispositifs de positionnement permettant de respecter l'espacement compris entre chaque section. Un design particulier permet son usage dans les coudes. Pour autant, les capteurs 5 et les thermocouples 500 restent identiques, ils peuvent être mixés sur une même ceinture 1. De très faible épaisseur, la ceinture 1 a été conçue pour une installation rapide (moins de 2 minutes par ceinture) et peu encombrante, elle peut être utilisée jusqu'à 400°C et être recouverte par un calorifuge matelas sans spécification particulière (par exemple pour les applications nucléaires). La ceinture 1 de mesure étant de très faible épaisseur, elle ne nécessite pas de design de calorifuge spécifique et peut être recouverte par un calorifuge matelas standard. La ceinture peut porter un ou plusieurs capteurs 5, la densité de capteurs 5 possible dépendant en grande partie du volume du capteur lui-même et de l'encombrement du dispositif 50 de mise en pression. Dans le cas de thermocouples, cette densité peut être très importante (jusqu'à 1 capteur tous les 15 mm de la circonférence du feuillard 10), densité qui peut être doublée en plaçant les capteurs 5 en étant décalés à la fois suivant la direction axiale X et suivant la direction tangentielle Y, avec le même décalage pour les dispositifs 50 d'appui situés au-dessus des capteurs 5, par exemple en pas japonais ainsi que le montre la figure 6 pour les capteurs 5 et les dispositifs 50 d'appui).

La ceinture 1, très légère, étant fixée de manière élastique sur l'objet OBJ ou la tuyauterie OBJ, et chaque capteur 5 disposant d'un système de mise en pression individuel, la ceinture 1 garantit un bon contact entre le capteur et la tuyauterie et cela indépendamment des variations de température (entraînant une dilatation et donc des sollicitations mécaniques), des vibrations ou du couple de serrage sur l'objet OBJ ou la tuyauterie OBJ. Elle présente une innocuité parfaite à l'égard de l'installation dans laquelle se trouve l'objet OBJ ou le circuit de fluide dans lequel se trouve la conduite ou tuyauterie OBJ.

Le dispositif 8 de serrage comporte en outre un deuxième module 200 de rapprochement des broches 21, 22 dans les première et deuxième directions, permettant l'immobilisation des broches 21, 22 dans une position de serrage de la ceinture 1 autour de l'objet OBJ. Ce module 200 de rapprochement comporte par exemple une pince de saisie des broches 21, 22 ainsi que cela est représenté aux figures 9 à 14.

Suivant un mode de réalisation, le deuxième module 200 de rapprochement comporte un premier mors 201 de saisie de la première broche 21 et un deuxième mors 202 de saisie de la deuxième broche 22. Le premier mors 201 est solidaire d'un premier bras 211, tandis que le deuxième mors 202 est solidaire d'un deuxième bras 212. Le premier bras 211 est articulé par rapport au deuxième bras 212 par un axe principal de rotation 203, qui est situé à distance des mors 201, 202.

Le deuxième module 200 de rapprochement comporte en outre au moins une vis 204 coopérant avec les bras 211 et 212 pour provoquer le rapprochement des mors 201, 202 entre eux par rotation des bras 211, 212 autour de l'axe principal 203.

Suivant un mode de réalisation, le module 200 de rapprochement est du type parallélogramme ou pantographe entre la vis 204 et les mors 201 et 202.

Ainsi, suivant un mode de réalisation, le module 200 de rapprochement comporte une première biellette 205 ayant un premier axe 207 d'articulation par rapport au premier bras 211, cet axe 207 d'articulation étant situé entre l'axe principal 203 et le premier mors 201. En outre, le deuxième module 200 de rapprochement comporte une deuxième biellette 206 ayant un deuxième axe 208 d'articulation par rapport au deuxième bras 212, cet axe 208 d'articulation étant situé entre l'axe principal 203 et le deuxième mors 202. Les biellettes 205 et 206 sont articulées entre elles par un troisième axe 209 d'articulation, qui est situé à distance des axes 207 et 208. La vis 204 coopère avec un premier support 231 monté sur l'axe principal 203 et avec un deuxième support 232 monté sur le troisième axe 209 pour permettre de rapprocher les mors 201, 202 l'un de l'autre par éloignement des premier et deuxième supports 231 et 232 l'un de l'autre.

Par exemple, la biellette 205 est parallèle au bras 212, tandis que la biellette 206 est parallèle au bras 211. Il est compris par exemple deux premiers mors 201 de respectivement deux premiers bras 211, qui sont situés à distance l'un de l'autre dans la direction axiale X entourés par la ceinture 1 et/ou deux deuxièmes mors 202 de respectivement deux deuxièmes bras 212 situés à distance l'un de l'autre suivant la direction axiale X entourés par la ceinture 1.

Par exemple, l'extrémité inférieure 2041 de la vis 204 est montée folle dans le support inférieur 232, tandis que, entre son extrémité inférieure 2041 et sa tête supérieure 2042, la vis 204 comporte un filetage 2043 inséré dans un taraudage correspondant 2044 du support supérieur 231 pour, par rotation de la tête 2042, faire se rapprocher et s'éloigner le support 231 par rapport au support 232 par rotation de la tête 2042 dans un sens ou dans l'autre. A cet effet, la tête 2042 peut être fixée à une molette 2043 de préhension manuelle de la vis 204. Ainsi, la rotation de la vis 204 dans un sens provoque le rapprochement des bras 211 et 212 contre les broches 21 et 22, ce qui permet de serrer ces broches 21 et 22 l'une vers l'autre et donc de serrer l'une vers l'autre les pièces 11 et 12 d'accrochage du feuillard 10. Du fait des mors 201 et 202, ce serrage se fait avec une grande force et permet de serrer la ceinture 1 dans une position d'immobilisation contre l'objet OBJ. Ce serrage par rapprochement des mors 201 et 202 se fait donc, parce que le module 3 a été au préalable monté sur les pièces 11 et 12, au-delà du serrage procuré par le module 3 de liaison des broches 21 et 22.

Lorsque le dispositif 8 de serrage est dans la position d'immobilisation du feuillard 10 autour de l'objet OBJ, on actionne au cours de la deuxième étape l'organe 54 de soulèvement pour faire passer la ou les pièce(s) intermédiaire(s) 52 de la deuxième position de soulèvement à la première position basse d'appui vers le capteur 5, ce qui plaque et immobilise le ou les capteur(s) 5 vers l'objet OBJ.

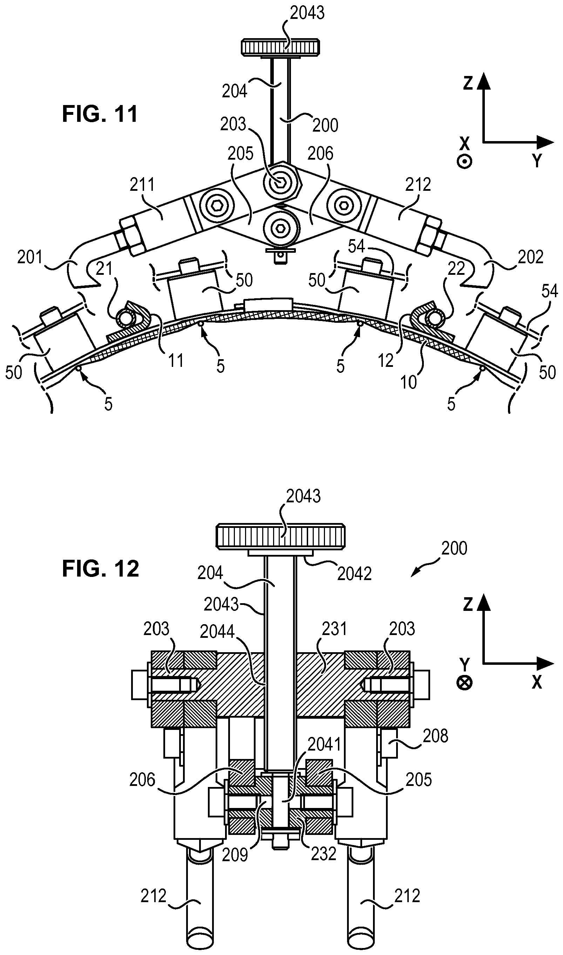

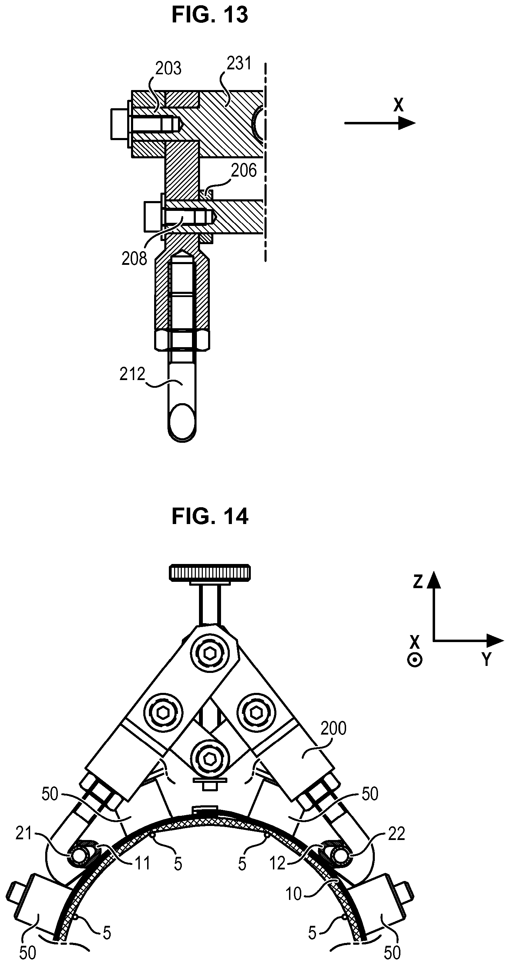

Pour enlever la ceinture 1 de l'objet OBJ, on actionne le dispositif 8 de serrage à savoir, dans l'exemple décrit ci-dessus, on actionne la vis 200 pour écarter les bras 211, 212 l'un de l'autre afin d'éloigner les mors 201 et 202 des broches 21 et 22, ainsi que représenté à la figure 11, par exemple au moins jusqu'à un angle d'ouverture de 140° entre les bras 211 et 212. Puis on enlève le module 3 de liaison par rapport aux pièces 11 et 12 d'accrochage. Ainsi que cela est représenté aux figures 10 et 14, le module 200 de rapprochement offre l'avantage de pouvoir s'adapter à des feuillards 10 de différentes longueurs de la circonférence 108 entre leurs pièces 11 et 12 d'accrochage, la figure 14 représentant ainsi le feuillard 10 de longueur inférieure à celui de la figure 10.

Le dispositif 8 de serrage offre l'avantage d'être adaptable à une large plage de diamètres d'objets et de longueurs de ceintures et à tout type d'objets cylindriques : tuyauteries, pressuriseurs, générateurs de vapeur, réacteurs, échangeurs, conduites d'eau. Non élastique, il permet le positionnement précis de la ceinture 1 et est conçu pour supporter les efforts mécaniques intenses exercés notamment lors de la mise en pression des capteurs 5. Il assure l'immobilité de la ceinture 1 lors de la mise en place du dispositif de serrage (deuxième étape) ou lors de son retrait à la dépose de l'instrumentation. Dans le cas de dispositifs comportant plusieurs ceintures 1 réunies les unes les autres pour ceinturer un grand diamètre ou une forme complexe, ce sont les dispositifs 8 de serrage qui permettront de s'assurer du bon positionnement de chaque ceinture 1 et assureront leur maintien ferme.

La ceinture 1 permet la mise en œuvre simultanée de plusieurs types de capteurs sur une seule et même ceinture 1. Leur positionnement, réalisé à la demande lors de la fabrication permet de s'adapter aux besoins réels. La mise en place de la ceinture 1 est très rapide et la mise en œuvre des capteurs 5 s'effectuant individuellement alors que la ceinture est fermement arrimée à la tuyauterie, peut être adaptée spécifiquement à chaque type de capteur. La dépose - repose de la ceinture 1 lors des arrêts de maintenance des installations, à l'occasion d'opérations de radiographie notamment est rapide et le reconditionnement des dispositifs 50 d'appui des capteurs 5 est aisé.

## Revendications

1. Ceinture de mesure de grandeurs physiques d'un objet, la ceinture comportant :
- au moins un capteur (5) de mesure,
- un feuillard (10) ayant une circonférence destinée à entourer l'objet,
- un dispositif (8) de serrage du feuillard autour de l'objet, la ceinture comportant en outre un dispositif (50) d'appui du capteur (5) de mesure selon un premier sens (55) d'une première direction dirigée vers l'objet,
le dispositif (50) d'appui comportant au moins un boîtier (53) fixé au feuillard (10), au moins une pièce intermédiaire (52), logée dans le boîtier (53), et au moins un organe (51) de contrainte intercalé entre le boîtier (53) et la pièce intermédiaire (52) et apte à faire prendre à la pièce intermédiaire (52) une première position basse d'appui vers le capteur (5) dans le premier sens (55) de la première direction (55) vers l'objet,
le dispositif (50) d'appui du capteur (5) comporte en outre un organe (54) de soulèvement, pour maintenir la pièce intermédiaire (52) dans une deuxième position de soulèvement au-dessus de la première position basse dans un deuxième sens (56) de la première direction, inverse du premier sens (55), à l'encontre de l'organe (51) de contrainte,
l'organe (54) de soulèvement étant actionnable depuis l'extérieur du boîtier (53) pour faire passer la pièce intermédiaire (52) de la deuxième position de soulèvement à la première position basse d'appui vers le capteur (5), **caractérisée** en ce l'organe (54) de soulèvement traverse un premier guide (520) compris dans la pièce intermédiaire (52) et en ce que l'organe (54) de soulèvement est en appui contre une butée (530) du boîtier (53) dans la deuxième position de soulèvement, l'organe (54) de soulèvement étant apte à être ôté du premier guide (520) de la pièce intermédiaire (52) pour faire passer la pièce intermédiaire (52) de la deuxième position de soulèvement à la première position basse d'appui vers le capteur (5).

2. Ceinture suivant la revendication 1, **caractérisée en ce que** le premier guide (520) comporte un trou (520) compris dans la pièce intermédiaire (52) pour le passage de l'organe (54) de soulèvement lors de son passage dans la deuxième position de soulèvement.

3. Ceinture suivant l'une quelconque des revendications précédentes, **caractérisée en ce que** l'organe (54) de soulèvement comprend un fil (540) ayant au moins une section (541) d'extrémité située à l'extérieur du boîtier (53) pour permettre d'ôter l'organe (54) de soulèvement.

4. Ceinture suivant l'une quelconque des revendications précédentes, **caractérisée en ce que** le capteur de mesure est un capteur de température.

5. Ceinture suivant l'une quelconque des revendications précédentes, **caractérisée en ce que** la ceinture comporte comme capteur (5) de mesure une pluralité de capteurs (5) de mesure répartis le long de la circonférence du feuillard (10), la pluralité de capteurs (5) de mesure étant associée à une pluralité de dispositifs (50) d'appui respectifs, ayant une pluralité d'organes (54) de soulèvement.

6. Ceinture suivant la revendication 5, **caractérisée en ce que** les organes (54) de soulèvement sont solidaires entre eux.

7. Ceinture suivant la revendication 5 ou 6, **caractérisée en ce que** les organes (54) de soulèvement sont formés par un même fil (540) ayant au moins une section (541) d'extrémité située à l'extérieur des boîtiers (52) pour permettre d'ôter les organes (54) de soulèvement.

8. Ceinture suivant l'une quelconque des revendications précédentes, **caractérisée en ce que** l'organe (51) de contrainte comprend un premier ressort (510) intercalé entre le boîtier (53) et la pièce intermédiaire (52).

9. Ceinture suivant l'une quelconque des revendications précédentes, **caractérisée en ce que** la ceinture comporte au moins une couche thermo-isolante (6) comprise entre la pièce intermédiaire (52) et le capteur (5) de mesure.

10. Ceinture suivant l'une quelconque des revendications précédentes, **caractérisée en ce que** le dispositif (8) de serrage du feuillard (10) autour de l'objet comporte :
au moins une première pièce (11) d'accrochage fixée à proximité d'une première extrémité (103) du feuillard (10) et au moins une deuxième pièce (12) d'accrochage fixée à proximité d'une deuxième extrémité (104) du feuillard (10),
un premier module (3) de liaison aux pièces (11, 12) d'accrochage, apte à être monté d'une manière amovible sur celles-ci,
le premier module (3) comportant une première broche (21) d'entraînement de la première pièce (11) d'accrochage dans une première direction de rapprochement vers la deuxième pièce (12) d'accrochage et une deuxième broche (22) d'entraînement de la deuxième pièce (12) d'accrochage dans une deuxième direction de rapprochement vers la première pièce (11) d'accrochage, au moins un deuxième guide (30) sur lequel les première et deuxième broches (21, 22) sont montées coulissantes respectivement dans les première et deuxième directions de rapprochement, et au moins un deuxième ressort (40) de contrainte monté entre au moins l'une des broches (21, 22) et le deuxième guide (30) pour faire se rapprocher les broches (21, 22) dans la première et/ou deuxième direction de rapprochement,
un deuxième module (200) de rapprochement des broches (21, 22) dans les première et deuxième directions, permettant l'immobilisation des broches (21, 22) dans une position de serrage de la ceinture autour de l'objet.

11. Ceinture suivant la revendication 10, **caractérisée en ce que** le deuxième module (200) de rapprochement comporte une pince de saisie des broches (21, 22).

12. Ceinture suivant la revendication 10 ou 11, **caractérisée en ce que** le deuxième module (200) de rapprochement comporte au moins un premier mors (201) de saisie de la première broche (21) et au moins un deuxième mors (202) de saisie de la deuxième broche (22), le premier mors (201) étant solidaire d'au moins un premier bras (211), le deuxième mors (202) étant solidaire d'au moins un deuxième bras (212), le premier bras (211) étant articulé par rapport au deuxième bras (212) par un axe principal de rotation (203) situé à distance des mors (201, 202), le deuxième module (200) de rapprochement comportant en outre au moins une vis (204) coopérant avec les bras (211, 212) pour provoquer le rapprochement des mors (201, 202) entre eux par rotation autour de l'axe principal (203).

13. Ceinture suivant la revendication 12, **caractérisée en ce que** le module (200) de rapprochement est du type parallélogramme ou pantographe entre la vis (204) et les mors (201, 202).

14. Ceinture suivant la revendication 12 ou 13, **caractérisée en ce que** le deuxième module (200) de rapprochement comporte au moins une première biellette (205) ayant un premier axe (207) d'articulation par rapport au premier bras (211) entre l'axe principal (203) et le premier mors (201), au moins une deuxième biellette (206) ayant un deuxième axe (208) d'articulation par rapport au deuxième bras (212) entre l'axe principal (203) et le deuxième mors (202), les biellettes (205, 206) étant articulées entre elles par un troisième axe (209) situé à distance des premier et deuxième axes (207, 208), la vis (204) coopérant avec un premier support (231) monté sur l'axe principal (203) et avec un deuxième support (232) monté sur le troisième axe (209) pour permettre de rapprocher les mors (201, 202) l'un de l'autre par éloignement des premier et deuxième supports (231, 232) l'un de l'autre.

## Patentansprüche

1. Gurt für die Messung von physikalischen Größen eines Objekts, wobei der Gurt Folgendes umfasst:
- zumindest einen Messsensor (5),
- ein Band (10) mit einem Umfang, der das Objekt umgeben soll,
- eine Vorrichtung (8) zum Spannen des Bands um das Objekt herum, wobei der Gurt ferner eine Auflagevorrichtung (50) zum Auflegen des Messsensors (5) in einem ersten Sinn (55) einer ersten zum Objekt führenden Richtung umfasst,
wobei die Auflagevorrichtung (50) zumindest ein auf dem Band (10) befestigtes Gehäuse (53), zumindest ein im Gehäuse (53) untergebrachtes Zwischenstück (52) und zumindest ein zwischen dem Gehäuse (53) und dem Zwischenstück (52) angeordnetes Spannelement (51) umfasst, das geeignet ist, das Zwischenstück (52) zu veranlassen, eine erste untere Auflageposition zum Sensor (5) im ersten Sinn (55) der ersten Richtung (55) zum Objekt einzunehmen,
die Auflagevorrichtung (50) des Sensors (5) ferner ein Hebeorgan (54) zum Halten des Zwischenstücks (52) in einer zweiten Hebeposition über der ersten unteren Position in einem zweiten Sinn (56) der ersten Richtung umgekehrt zum ersten Sinn (55) gegen das Spannelement (51) umfasst,
wobei das Hebeorgan (54) vom Gehäuseäußeren (53) aus betätigt werden kann, um das Zwischenstück (52) von der zweiten Hebeposition in die erste untere Auflageposition zum Sensor (5) zu bringen,
**dadurch gekennzeichnet, dass** das Hebeorgan (54) eine erste Führung (520) im Zwischenstück (52) durchquert, und dass das Hebeorgan (54) in der zweiten Hebeposition an einem Anschlag (530) des Gehäuses (53) aufliegt, wobei das Hebeorgan (54) aus der ersten Führung (520) des Zwischenstücks (52) entfernt werden kann, um das Zwischenstück (52) von der zweiten Hebeposition zur ersten unteren Auflageposition zum Sensor hin (5) zu bringen.

2. Gurt nach Anspruch 1, **dadurch gekennzeichnet, dass** die erste Führung (520) ein Loch (520) hat, das im Zwischenstück (52) für den Durchgang des Hebeorgans (54) bei seinem Übergang in die zweite Hebeposition vorhanden ist.

3. Gurt nach einem beliebigen der vorstehenden Ansprüche, **dadurch gekennzeichnet, dass** das Hebeorgan (54) einen Draht (540) mit zumindest einem Endabschnitt (541) aufweist, der sich außerhalb des Gehäuses (53) befindet, damit das Hebeorgan (54) entfernt werden kann.

4. Gurt nach einem beliebigen der vorstehenden Ansprüche, **dadurch gekennzeichnet, dass** der Messsensor ein Temperaturfühler ist.

5. Gurt nach einem beliebigen der vorstehenden Ansprüche, **dadurch gekennzeichnet, dass** der Gurt als Messsensor (5) eine Mehrzahl von Messsensoren (5) aufweist, die entlang des Umfangs des Bands (10) verteilt sind, wobei die Mehrzahl der Messsensoren (5) einer Mehrzahl von jeweiligen Auflagevorrichtungen (50) mit einer Mehrzahl von Hebeorganen (54) zugeordnet ist.

6. Gurt nach Anspruch 5, **dadurch gekennzeichnet, dass** die Hebeorgane (54) fest miteinander verbunden sind.

7. Gurt nach Anspruch 5 oder 6, **dadurch gekennzeichnet, dass** die Hebeorgane (54) aus einem gleichen Draht (540) gebildet sind, der zumindest einen Endabschnitt (541) aufweist, der sich außerhalb der Gehäuse (52) befindet, damit die Hebeorgane (54) entfernt werden können.

8. Gurt nach einem beliebigen der vorstehenden Ansprüche, **dadurch gekennzeichnet, dass** das Spannelement (51) eine erste Feder (510) umfasst, die zwischen dem Gehäuse (53) und dem Zwischenstück (52) angeordnet ist.

9. Gurt nach einem beliebigen der vorstehenden Ansprüche, **dadurch gekennzeichnet, dass** der Gurt zumindest eine wärmeisolierende Schicht (6) aufweist, die zwischen dem Zwischenstück (52) und dem Messsensor (5) vorhanden ist.

10. Gurt nach einem beliebigen der vorstehenden Ansprüche, **dadurch gekennzeichnet, dass** die Vorrichtung (8) zum Spannen des Bands (10) um das Objekt Folgendes umfasst:
zumindest ein erstes Befestigungsteil (11), das in der Nähe eines ersten Endes (103) des Bands (10) befestigt ist, und zumindest ein zweites Befestigungsteil (12), das in der Nähe eines zweiten Endes (104) des Bands (10) befestigt ist,
ein erstes Modul (3) zur Verbindung mit den Befestigungsteilen (11, 12), das daran abnehmbar montiert werden kann,
wobei das erste Modul (3) eine erste Antriebsspindel (21) zum Antrieb des ersten Befestigungsteils (11) in einer ersten Anfahrrichtung zum zweiten Befestigungsteil (12) und eine zweite Antriebsspindel (22) zum Antrieb des zweiten Befestigungsteils (12) in einer zweiten Anfahrrichtung zum ersten Befestigungsteil (11) aufweist, zumindest eine zweite Führung (30), auf der die erste und die zweite Spindel (21, 22) in der ersten beziehungsweise zweiten Anfahrrichtung gleitend angebracht sind, und zumindest eine zweite Spannfeder (40), die zwischen zumindest einer der Spindeln (21, 22) und der zweiten Führung (30) montiert ist, um die Spindeln (21, 22) sich in der ersten und/oder zweiten Anfahrrichtung annähern zu lassen,
ein zweites Anfahrmodul (200) zur Annäherung der Spindeln (21, 22) in der ersten und zweiten Richtung, wobei die Spindeln (21, 22) in einer Spannposition des Gurts um das Objekt herum festgestellt werden können.

11. Gurt nach Anspruch 10, **dadurch gekennzeichnet, dass** das zweite Anfahrmodul (200) einen Punkt zum Greifen der Spindeln (21, 22) umfasst.

12. Gurt nach Anspruch 10 oder 11, **dadurch gekennzeichnet, dass** das zweite Anfahrmodul (200) zumindest eine erste Greifbacke (201) zum Greifen der ersten Spindel (21) und zumindest eine zweite Greifbacke (202) zum Greifen der zweiten Spindel (22) umfasst, wobei die erste Greifbacke (201) fest mit zumindest einem ersten Arm (211) verbunden ist und die zweite Greifbacke (202) fest mit zumindest einem zweiten Arm (212) verbunden ist, wobei der erste Arm (211) in Bezug auf den zweiten Arm (212) durch eine Hauptdrehachse (203) angelenkt ist, die sich in einer Entfernung von den Backen (201, 202) befindet, wobei das zweite Anfahrmodul (200) ferner zumindest eine Schraube (204) umfasst, die mit den Armen (211, 212) zusammenwirkt, um die Annäherung der Backen (201, 202) aneinander durch Drehung um die Hauptachse (203) zu bewirken.

13. Gurt nach Anspruch 12, **dadurch gekennzeichnet, dass** das Anfahrmodul (200) vom Typ Parallelogramm oder Pantograph zwischen der Schraube (204) und den Backen (201, 202) ist.

14. Gurt nach Anspruch 12 oder 13, **dadurch gekennzeichnet, dass** das zweite Anfahrmodul (200) zumindest einen erste Schwingarm (205) umfasst, der eine erste Gelenkachse (207) in Bezug auf den ersten Arm (211) zwischen der Hauptachse (203) und der ersten Backe (201) hat, zumindest einen zweiten Schwingarm (206) mit einer zweiten Gelenkachse (208) in Bezug auf den zweiten Arm (212) zwischen der Hauptachse (203) und der zweiten Backe (202), wobei die Schwingarme (205, 206) durch eine dritte Achse (209) angelenkt sind, die sich in einer Entfernung von der ersten und der zweiten Achse (207, 208) befindet, wobei die Schraube (204) mit einem ersten Träger (231) zusammenwirkt, der auf der Hauptachse (203) montiert ist, und mit einem zweiten Träger (232), der auf der dritten Achse (209) montiert ist, um eine Annäherung der Backen (201, 202) aneinander durch Entfernung des ersten und des zweiten Trägers (231, 232) voneinander zu ermöglichen.

## Claims

1. A belt for measuring physical quantities of an object, the belt comprising:
- at least one measurement sensor (5),
- a strip (10) having a circumference intended to surround the object,
- a device (8) for clamping the strip around the object,
wherein the belt further comprises a pressing device (50) for pressing the measurement sensor (5) in a first orientation (55) of a first direction directed toward the object,
the pressing device (50) comprising at least one casing (53) attached to the strip (10), at least one intermediate part (52) housed in the casing (53), and at least one constraining member (51) inserted between the casing (53) and the intermediate part (52) and capable of having the intermediate part (52) assume a first low position in which it presses toward the sensor (5) in the first orientation (55) of the first direction (55) toward the object,
the pressing device (50) of the sensor (5) further comprises a lifting member (54), for holding the intermediate part (52) in a second lifting position above the first low position in a second orientation (56) of the first direction, opposite the first orientation (55) against the constraining member (51),
the lifting member (54) being actuable from the outside of the casing (53) to have the intermediate part (52) pass from the second lifting position to the first low position in which it presses toward the sensor (5),
**characterized in that** the lifting member (54) passes through a first guide (520) provided in the intermediate part (52) and the lifting member (54) abuts against an abutment (530) of the casing (53) in the second lifting position, the lifting member (54) being capable of being removed from the first guide (520) of the intermediate part (52) to have the intermediate part (52) pass from the second lifting position to the first low position in which it presses toward the sensor (5).

2. The belt according to claim 1, **characterized in that** the first guide (520) comprises in the intermediate part (52) a hole (520) for letting through the lifting member (54) in the intermediate part (52) during its passage into the second lifting position.

3. The belt according to any one of the preceding claims, **characterized in that** the lifting member (54) comprises a wire (540) having at least one end section (541) situated outside the casing (53) to allow the lifting member (54) to be removed.

4. The belt according to any one of the preceding claims, **characterized in that** the measurement sensor is a temperature sensor.

5. The belt according to any one of the preceding claims, **characterized in that** the belt comprises as a measurement sensor (5) a plurality of measurement sensors (5) distributed along the circumference of the strip (10), the plurality of measurement sensors (5) being associated with a plurality of respective pressing devices (50) having a plurality of lifting members (54).

6. The belt according to claim 5, **characterized in that** the lifting members (54) are mutually integral.

7. The belt according to claim 5 or 6, **characterized in that** the lifting members (54) are formed by the same wire (540) having at least one end section (541) situated outside the casings (52) to allow the lifting members (54) to be removed.

8. The belt according to any one of the preceding claims, **characterized in that** the constraining member (51) comprises a first spring (510) inserted between the casing (53) and the intermediate part (52).

9. The belt according to any one of the preceding claims, **characterized in that** the belt comprises at least one heat-insulating layer (6) comprised between the intermediate part (52) and the measurement sensor (5).

10. The belt according to any one of the preceding claims, **characterized in that** the device (8) for clamping the strip (10) around the object comprises:
at least one first hooking part (11) attached in proximity to a first end (103) of the strip (10) and at least one second hooking part (12) attached in proximity to a second end (104) of the strip (10),
a first module (3) for connection to the hooking parts (11, 12), capable of being mounted removably on them,
the first module (3) comprising a first spindle (21) for driving the first hooking part (11) in a first joining direction coming closer to the second hooking part (12) and a second spindle (22) for driving the second hooking part (12) in a second joining direction coming closer to the first hooking part (11), at least one second guide (30) on which the first and second spindles (21, 22) are slidably mounted respectively in the first and second joining directions, and at least one second bias spring (40) mounted between at least one of the spindles (21, 22) and the second guide (30) to cause the spindles (21, 22) to come closer one to another in the first and/or second joining direction,
a second approximation module (200) for bringing the spindles (21, 22) closer in the first and second directions, allowing the immobilization of the spindles (21, 22) in a clamping position of the belt around the object.

11. The belt according to claim 10, **characterized in that** the second approximation module (200) comprises a gripper for gripping the spindles (21, 22).

12. The belt according to claim 10 or 11, **characterized in that** the second approximation module (200) comprises at least one first jaw (201) for gripping the first spindle (21) and at least one second jaw (202) for gripping the second spindle (22), the first jaw (201) being integral with at least one first arm (211), the second jaw (202) being integral with at least one second arm (212), the first arm (211) being hinged with respect to the second arm (212) by a main axis of rotation (203) situated at a distance from the jaws (201, 202), the second approximation module (200) further comprising at least one screw (204) cooperating with the arms (211, 212) to cause the jaws (201, 202) to come closer one to another by rotation around the main axis (203).

13. The belt according to claim 12, **characterized in that** the approximation module (200) is of the parallelogram or pantograph type between the screw (204) and the jaws (201, 202).

14. The belt according to claim 12 or 13, **characterized in that** the second approximation module (200) comprises at least one first connecting rod (205) having a first hinge axis (207) with respect to the first arm (211) between the main axis (203) and the first jaw (201), at least one second connecting rod (206) having a second hinge axis (208) with respect to the second arm (212) between the main axis (203) and the second jaw (202), the connecting rods (205, 206) being mutually hinged by a third axis (209) situated at a distance from the first and second axes (207, 208), the screw (204) cooperating with a first support (231) mounted on the main axis (203) and with a second support (232) mounted on the third axis (209) to allow the jaws (201, 202) to come closer one to another by moving the first and second supports (231, 232) away one from another.
